# EUROPEAN PATENT APPLICATION

(11) **EP 3 040 209 A1**
(43) Date of publication of application: **06.07.2016**
(21) Application number: 15202087.1
(22) Date of filing: 22.12.2015
(51) Int. Cl.: B60B 19/04, B60C 7/18, B60B 9/26, B60C 7/14

(54) **AIRLESS TIRE**

(30) Priority: 05.01.2015 KR 20150000448
(71) Applicant: Hankook Tire Co., Ltd., Seoul 135-723 (KR)
(72) Inventor: Jang, Min Su, 305-721 Daejeon (KR); Kang, Seung Koo, 137-843 Seoul (KR); Choi, Yoon-Jin, 305-725 Daejeon (KR); Song, Choong-Kee, 306-828 Daejeon (KR)
(74) Representative: Petraz, Gilberto Luigi

(57) **Abstract**

Provided is an airless tire (100) which includes plural tread blocks (110) that are arranged along the circumference, plural spokes (120) that are connected respectively to the tread blocks (110) in the inner circumference direction, and a hub axle (130) that is disposed at the center of the circumference, is connected to the plural spokes (120), and has its length modified so that the distances between the tread blocks (110) are regulated through the spokes (120).

## Description

### BACKGROUND OF THE INVENTION

### 1. Field of the Invention

The present invention relates to an airless tire, and more particularly to an airless tire which can simultaneously realize the functions of a normal tire and a snow tire.

### 2. Description of the Related Art

A tire is one of the parts that constitute a vehicle, and is brought into direct contact with the road surface. Air inside a tire acts as a buffer in the same manner as a spring does, and air can enhance the ride comfort by absorbing the impact occurring due to the surface unevenness of the road surface.

Tires that can realize the steering properties of vehicles may be classified into radial tires, airless tires, solid tires and the like, depending on the structure of the tire. Among them, in most of passenger cars and vehicles excluding special purpose vehicles, radial tires are used. Radial tires have a disadvantage that the production process therefor is complicated, and the air pressure must be checked frequently. Also, radial tires have a stability problem that the tire may be damaged by puncture and impact caused by external foreign materials during driving.

Unlike such pneumatic tires, airless tires are tires based on processes and structures under new conception, by which the production cost can be decreased significantly through simplification of material and process, and also the amount of energy used and the amount of hazardous materials generated can be markedly decreased. Furthermore, airless tires do not have the problems that can be generated due to insufficient air pressure or the like. Also, airless tires have an advantage that the standing wave shape usually occurring in radial tires can be prevented, and the rolling resistance can be significantly improved.

Such an airless tire has a structure that is totally different from the structure of a radial tire. Unlike a radial tire, since an airless tire is designed not to use compressed air at all, an airless tire is free from the risk of accidents that may be caused during driving by a loss of air pressure or flat tire. Furthermore, with airless tires, the production cost can be significantly reduced through simplification of materials and processes, unlike the radial tires.

On the other hand, tires can be distinguished between normal tires and snow tires, depending on the road surface state in which the tire is used. Normal tires and snow tires have been developed in accordance with particular road surface conditions, and are designed so as to maintain stability of the vehicle as the user replaces the tires in accordance with the driving conditions and environment. However, on a road surface covered with snow due to sudden snowing during the winter season, a vehicle equipped with normal tires easily loses the grip force and comes to face circumstances with difficulties in driving, braking and cornering. Thus, the driver may feel inconvenient to replace the normal tires with snow tires, or to prepare special equipment such as snow chains.

Furthermore, in the case of using snow tires, snow tires have reduced grip force compared to normal tires on dry road surfaces or wet road surfaces, and may have a problem in the safety of vehicle at the time of the occurrence of a risky situation.

### Cited References

Patent Document 1: US Registered Patent No. 4784201 (date of registration: Nov. 15, 1988)
Patent Document 2: US Registered Patent No. 5676900 (date of registration: Oct. 14, 1997)
Patent Document 3: US Patent Application Publication No. 2009-0283185 (date of publication: Nov. 19, 2009)
Patent Document 4: US Patent Application Publication No. 2010-0132858 (date of publication: Jun. 3, 2010)

### SUMMARY OF THE INVENTION

An object of the present invention is to provide an airless tire which can cope with rapid weather changes and subsequent changes in the road surfaces conveniently and effectively, and can enhance safety.

In order to solve the problems described above, the airless tire according to the present invention includes plural tread blocks that are arranged along the circumference; plural spokes that are respectively connected to the tread blocks in the inner circumference direction; and a hub axle driven to regulate the distances between the tread blocks through the plural spokes so as to modify the lengths.

The hub axle is modifiable to a first length that is intended to realize a normal mode in which the tread blocks are brought closely together, and to a second length that is smaller than the first length and is intended to realize a snow mode in which the tread blocks are separated apart from each other at predetermined distances.

The airless tire according to the present invention may have the first diameter in the normal mode, and may have the second diameter that is larger than the first diameter, in the snow mode. At this time, the dimension of the second diameter may be 1.5 times or less the dimension of the first diameter.

The airless tire according to the present invention may include 4 to 50 tread blocks that are arranged along the circumference.

The tread blocks may include protrusions and indentations that are repeatedly formed along the length direction of the hub axle. The tread blocks may further include studs that are formed on the protrusions.

The tread blocks may include an inner surface formed of a polyurethane material, and a outer surface formed of a tire compound material.

The inner surface may include a number of plates that are arranged perpendicularly to the outer surface to be separated from each other at a certain distance along the direction of rotation of the airless tire.

The spokes may be formed of a metal material, and the tread blocks and the spokes may be connected by hinges, or the hub axle and the spokes may be connected by hinges.

The hub axle may have the length modified through the control of a hydraulic system or an electric system.

A pair of the spokes may be connected to the two ends of one of the tread blocks and the hub axle.

The hub axle may include a connection unit configured such that one end of the hub axle is bonded to the driving shaft of the vehicle.

The airless tire according to the present invention has an effect that the airless tire can conveniently and efficiently cope with rapid weather change and subsequent change of the road surface, without any extra tire replacement or mounting of additional equipment such as snow chains.

Furthermore, the airless tire according to the present invention has an effect that the airless tire has a grip force on a road surface covered with snow, and can maintain a grip force equal to that of a normal tire even on a dry road surface or a wet road surface.

### BRIEF DESCRIPTION OF THE DRAWINGS

FIG. 1 is a perspective view diagram illustrating an airless tire according to a first embodiment of the present invention.
FIG. 2 is a perspective view diagram illustrating the tread blocks of the tire shown in FIG. 1.
FIG. 3 is a front view diagram illustrating the configuration in the normal mode of the airless tire according to the first embodiment of the present invention.
FIG. 4 is a partially cut perspective view diagram illustrating the configuration in the normal mode of the airless tire according to the first embodiment of the present invention.
FIG. 5 is a front view diagram illustrating the configuration in the snow mode of the airless tire according to the first embodiment of the present invention.
FIG. 6 is a partially cut perspective view diagram illustrating the configuration in the snow mode of the airless tire according to the first embodiment of the present invention.
FIG. 7 is a perspective view diagram illustrating the tread blocks of an airless tire according to a second embodiment of the present invention.
FIG. 8 is a perspective view diagram illustrating the studs provided to the tread blocks shown in FIG. 7.
FIG. 9 is a perspective view diagram illustrating the configuration in the normal mode of the airless tire according to the second embodiment of the present invention.
FIG. 10 is a perspective view diagram illustrating the configuration in the snow mode of the airless tire according to the second embodiment of the present invention.

### DETAILED DESCRIPTION OF THE PREFERRED EMBODIMENTS

Advantages and features of the present invention, and methods for achieving those will be made clear when reference is made to embodiments described below in detail together with the attached drawings. However, the present invention is not intended to be limited to the embodiments described herein and may be embodied in other forms. Rather, the embodiments described herein are provided so that the disclosed matters can be made perfect, and the idea of the present invention can be sufficiently conveyed to those ordinarily skilled in the art.

The terms used in the present specification are used simply for the purpose of explaining particular Examples and are not intended to limit the present invention. Unless particularly stated otherwise, an expression of singularity is meant to include an expression of plurality. It should be construed that terms such as "include (including)" or "have (having)" as used in the present specification are used to define the existence of features, numbers, stages, operations, constituent elements, parts, or combinations thereof as described in the specification, and are not intended to exclude in advance the possibility of the existence or addition of one or more other features, numbers, stages, operations, constituent elements, parts, or combinations thereof.

Unless defined otherwise, all of the terms used herein including technical or scientific terms have the same meanings as the terms that are generally understood by those having ordinary skill in the art to which the present invention is pertained. It should be construed that terms such as those defined in dictionaries that are generally used have meanings coincident with the contextual meanings of the related art, and unless clearly defined in the present specification, the terms should not be construed to have ideal meanings or excessively formal meanings.

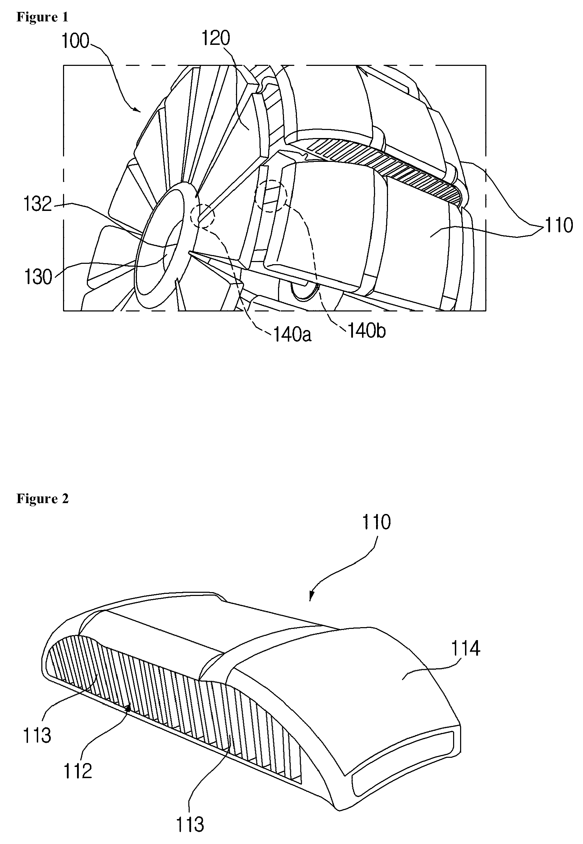

Hereinafter, the airless tire according to embodiments of the present invention is explained in detail with reference to the attached drawings. FIG. 1 is a perspective view diagram illustrating an airless tire (100) according to a first embodiment of the present invention. As illustrated in FIG. 1, the airless tire (100) according to the first embodiment of the present invention includes plural tread blocks (110) that are arranged along the circumference; spokes (120) that are connected correspondingly to the tread blocks; and a hub axle (130).

FIG. 2 is a perspective view diagram illustrating the tread blocks (110) included in the airless tire (100) of the present embodiment. As illustrated in FIG. 2, the tread blocks (110) include an inner surface (112) that is positioned on the inner circumference side of the airless tire (11), and an outer surface (114) that is the portion directly brought into contact with the road surface. The inner surface (112) is a part that supports the weight while maintaining rigidity, and may be formed of, for example, a polyurethane material. As illustrated in Fig. 2, according to the present embodiment, the inner surface (112) includes a number of polyurethane plates (113) that are arranged perpendicularly to the outer surface (114) to be separated from each other at a certain distance along the direction of rolling of the tire. The outer surface (114) is formed of a tire compound material so as to exhibit the intrinsic properties of the tire, and can increase the grip force of the airless tire (100).

The airless tire (100) according to the present embodiment may be configured to include 4 to 50 tread blocks (110) according to the kind of the vehicle and the variation in the dimensional standards of the tire.

The spokes are respectively connected to the tread blocks (110) in the inner circumference direction, and may be formed of a metal material having sufficient rigidity for the purpose of supporting the weight of the vehicle and transferring the braking and driving power. The airless tire (100) according to the present embodiment is configured such that a pair of the spokes (120) are connected to the two ends in the hub axle (130) direction of one tread block (110); however, if necessary, it may be configured such that two or more spokes (120) are connected to one tread block (110), or one spoke (120) is connected to only one end of one tread block (110). The present invention is not limited to these.

Furthermore, the spokes (120) may be connected to the tread blocks (110) through hinds (140b), and accordingly, as illustrated in FIG. 1, a shape in which the spokes can be attached to a vehicle in the form of a wheel together with the airless tire (100). As illustrated in FIG. 1, the spokes (120) may have an approximately trapezoidal shape in which the length of the portion connected to the tread block (110) is larger than the length of the portion connected to the hub axle (130).

The hub axle (130) is disposed at the center of the circumference and is connected to plural spokes (120). As illustrated in the diagram, the hub axle (130) includes a connection unit (132) and thereby allows an airless tire (100) in the form of having the tire and the wheel joined together, to be directly mounted on the driving shaft of the vehicle (not shown in the diagram). The hub axle (130) may be connected to the spokes (120) through hinges (140b), and as the spokes (120) are connected to the hub axle (130) and the tread blocks (110) through hinges (140a, 140b), rotation can occur smoothly on the inner side and the outer side of the tire.

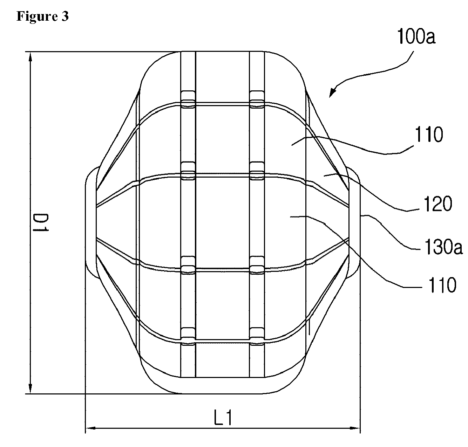

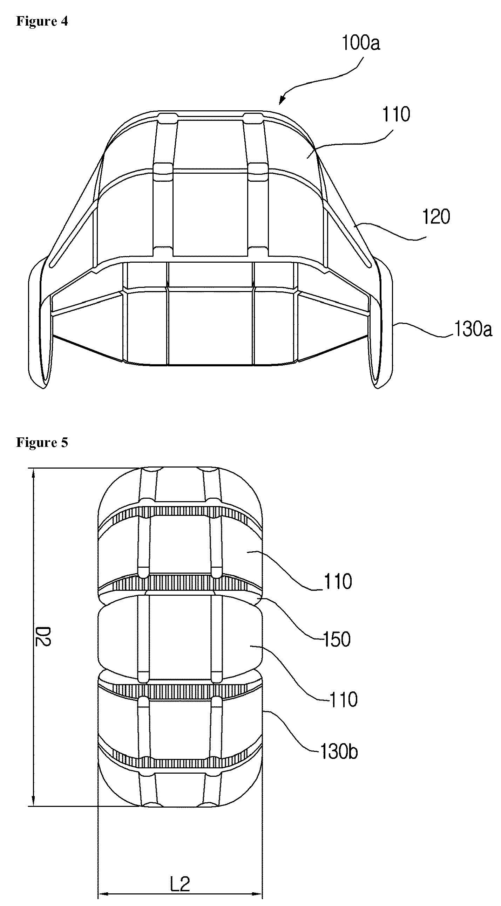

The hub axle (130) has a modifiable length, and regulates the distances between the tread blocks (110) through the spokes (120). The hub axle (130) may have its length modified by the control of a hydraulic system or an electrical system. This will be described in detail with reference to FIG. 3 and FIG. 4.

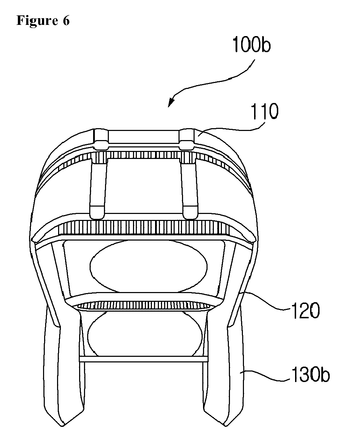

FIG. 3 and FIG. 4 are respectively a front view diagram and a partially cut perspective view diagram illustrating a normal mode of the airless tire (100a) according to the present embodiment, and FIG. 5 and FIG. 6 are respectively a front view diagram and a partially cut perspective view diagram illustrating a snow mode.

As illustrated in FIG. 3 and FIG. 4, the hub axle (130a) has a first length (L1) in the normal mode, and the airless tire (100) has a first diameter (D1) in accordance with the length (L1) of the hub axle (130a). At this time, adjacent tread blocks (110) are arranged to be brought closely together or to be separated at a relatively small distance.

The first diameter (D1) in the normal mode may be set to be optimized for the vehicle state under dry road surface conditions or wet road surface conditions. Accordingly, the respective tread blocks (110) are locked and exhibit a grip force on a dry road surface or a wet road surface, and thus the snow tire can exhibit excellent steering stability and excellent driving and braking performances.

Furthermore, as illustrated in FIG. 5 and FIG. 6, in the snow mode, the hub axle (130b) is operated to have a second length (L2) that is smaller than the first length (L1) of the normal mode, and in connection therewith, the plural spokes (120) connected to the hub axle (130b) push away the tread blocks (110) toward the outer circumference side. Thus, the airless tire (100b) acquires a second diameter (D2) that is larger than the first diameter (D1). As the diameter of the airless tire (100b) increases, the adjacent tread blocks (110) are separated apart at a predetermined distance larger than the distance in the normal mode, and grooves (150) are formed between the adjacent tread blocks (110) along the hub axle (130b) direction. The grooves (150) formed as such allow snow traction or snow gripping.

At this time, the second diameter (D2) of the airless tire (100b) in the snow mode is larger than the first diameter (D1) in the normal mode. However, when the stability during vehicle driving and the like are considered, it is preferable that the dimension of the second diameter (D2) is 1.5 times or less the dimension of the first diameter (D1). Furthermore, according to the present embodiment, the diameter of the airless tire (100), and consequently the distances between the tread blocks (110), can be regulated by operating the hub axle (130) in accordance with the state of the road surface such as the amount of snowfall. For example, in the case of a large amount of snowfall and a very slippery road surface, the length of the hub axle (130) can be minimized, and thereby the widths of the grooves (150) made by the distances between the tread blocks (110) can be maximized. Thus, the snow traction level can be maximized. At this time, the widths of the grooves (150) may be automatically set based on data such as the amount of snowfall, air temperature, and moisture sensing, and the widths of the grooves (150) can be regulated by the driver's operation.

In the following, an airless tire (200a, 200b) according to a second embodiment of the present invention is explained in detail with reference to the attached drawings. The constituent elements of the airless tire (200a, 200b) of the present embodiment other than the constitution described below are the same as the corresponding constituent elements of the first embodiment described above, and further description on these elements will not be repeated in the following description.

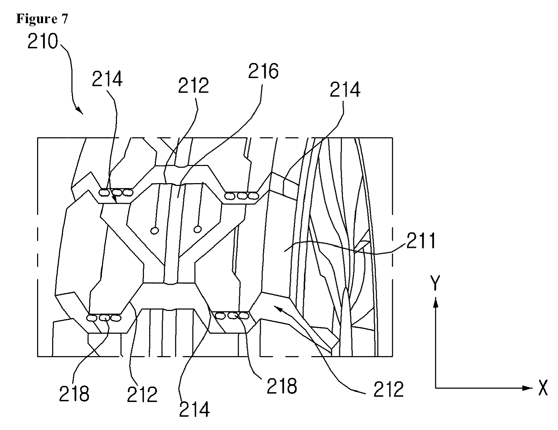

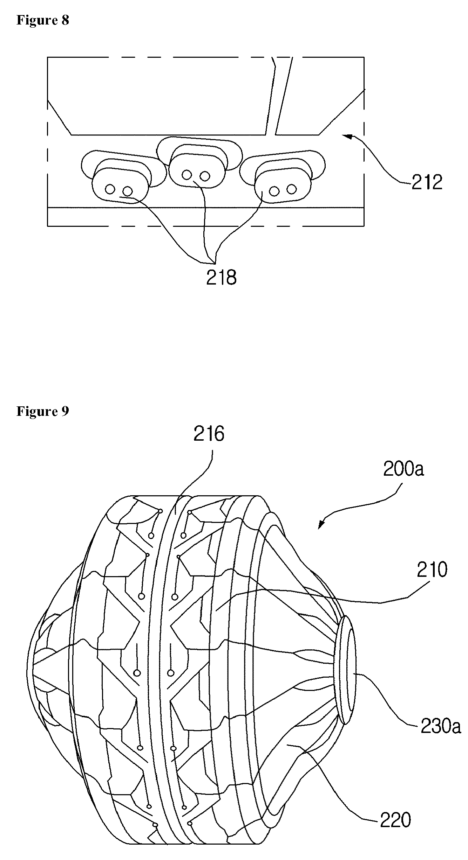

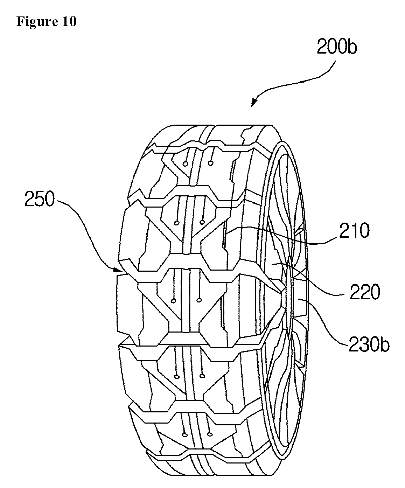

FIG. 7 is a perspective view diagram illustrating the tread blocks (210) of the airless tire (200a, 200b) according to the second embodiment of the present invention, and FIG. 8 is a magnified perspective view diagram illustrating the studs (218) provided to the tread blocks (210) of FIG. 7. FIG. 9 and FIG. 10 are perspective view diagrams illustrating the airless tire (200a, 200b) according to the present embodiment in the normal mode and the snow mode, respectively.

As illustrated in FIG. 7, each tread block (210) of the present embodiment includes, at the two ends, protrusions (212) that are repeatedly formed along the length direction (X) of the hub axle (230); and indentations (214) having shapes corresponding to the shapes of the protrusions (212). The protrusions (212) formed in a tread block (210) are inserted into the indentations (214) formed in an adjacent tread block (210). Furthermore, at the outer surface (211) of the tread block 9210), a center groove (216) is formed along the circumference of the airless tire (200) in the middle of the outer surface (211).

As illustrated in FIG. 8, according to the present embodiment, when studs (218) are formed on the protrusions (212) of the tread block, the snow gripping effect exhibited by the grooves (250) formed in the snow mode can be further enhanced. The studs (218) may be formed of, for example, a metal material.

According to the configuration of the tread blocks (210) having such a structure, as illustrated in FIG. 9, the airless tire (200a) in the normal mode has a relatively small diameter so that adjacent tread blocks (210) are engaged with each other as the protrusions are inserted into the indentations. Accordingly, the road surface grip force can be further increased on a dry road surface or a wet road surface. Furthermore, the grip force on a wet road surface can be maximized by the center grooves (216) formed connectedly along the circumference direction.

Furthermore, as illustrated in FIG. 10, the airless tire (200) according to the present embodiment in the snow mode is driven to have the length of the hub axle (230) shortened in the snow mode. Accordingly, the spokes (220) connected to the hub axle (230) push away the tread blocks (210) toward the outer circumference direction, and the diameter of the airless tire (200) is increased. Thus, grooves (250) having a zigzag shape are formed along the pattern of the shapes of the protrusions (212) and the indentations (250) in the hub axle direction (230). As the grooves (250) having a zigzag shape are formed, the snow gripping may be further enhanced as compared to the case in which linear grooves are formed.

As explained above, the airless tire according to the embodiment of the present invention can efficiently and conveniently cope with rapid weather changes and the subsequent changes in the road surface state, even without replace of tire or mounting of special equipment such as snow chains. Thus, the airless tire can maximize driving safety and convenience.

A preferred exemplary embodiment of the present invention has been explained with reference to the attached drawings; however, it should be understood that any person having ordinary skill in the art to which the present invention is pertained can carry out the present invention in other specific embodiments without modifying the technical idea or essential features of the present invention. Therefore, it should be construed that the embodiments described above are only for illustrative purposes in all aspects and are not intended to limit the invention.

### REFERENCE SIGNS

100, 200: Airless tire
110, 210: Tread block
112: Inner side
113: Plate
114: Outer surface
120, 220: Spoke
130, 230: Hub axle
132: Connection unit
140: Hinge
150: Groove
212: Protrusion
214: Indentation
216: Center groove
218: Stud

## Claims

1. An airless tire comprising:
plural tread blocks arranged along the circumference;
plural spokes connected respectively to the tread blocks in the inner circumference direction; and
a hub axle that is disposed at the center of the circumference, is connected to the plural spokes, and has the length thereof modified so that the distances between the tread blocks are regulated through the spokes.

2. The airless tire according to claim 1, wherein the hub axle is modified to a first length intended to realize a normal mode in which the tread blocks are brought closely together; and to a second length that is smaller than the first length and is intended to realize a snow mode in which the tread blocks are separated apart from each other at a predetermined distance.

3. The airless tire according to claim 2, wherein the airless tire has the first diameter in the normal mode, and has the second diameter, which is larger than the first diameter, in the snow mode.

4. The airless tire according to claim 3, wherein the dimension of the second diameter is 1.5 times or less the dimension of the first diameter.

5. The airless tire according to claim 1, wherein the airless tire comprises 4 to 50 tread blocks that are arranged along the circumference of the tire.

6. The airless tire according to claim 1, wherein each tread block includes protrusions that are repeatedly formed along the hub axle direction, and indentations having shapes that are corresponding to the shapes of the protrusions.

7. The airless tire according to claim 6, wherein the tread block includes studs that are formed on the protrusions.

8. The airless tire according to claim 1, wherein the tread block includes an inner surface formed of a polyurethane material, and an outer surface formed of a tire compound material.

9. The airless tire according to claim 8, wherein the inner surface includes a number of plates that are arranged perpendicularly to the outer surface to be separated from each other at a certain distance along the direction of rotation of the tire.

10. The airless tire according to claim 1, wherein the spokes are formed of a metal material.

11. The airless tire according to claim 1, wherein the tread blocks and the spokes are connected through hinges.

12. The airless tire according to claim 1, wherein the hub axle and the spokes are connected through hinges.

13. The airless tire according to claim 1, wherein the hub axle has the length modified by the control of a hydraulic system or an electrical system.

14. The airless tire according to claim 1, wherein a pair of the spokes are connected to two ends of one of the tread blocks and the hub axle.

15. The airless tire according to claim 1, wherein the hub axle includes a connection unit configured such that one side of the connection unit is engaged with the driving shaft of the vehicle.
